(19) Europäisches Patentamt
European Patent Office
Office européen des brevets

(11) Publication number: 0 103 282 B1

(12) EUROPEAN PATENT SPECIFICATION

(45) Date of publication of patent specification: 12.09.90

(51) Int. Cl.[5]: C 08 G 59/08, C 08 G 59/06, C 08 G 59/10

(21) Application number: 83108908.1

(22) Date of filing: 09.09.83

# (54) A process for preparing glycidyl derivatives of compounds having at least one aromatic hydroxyl group or aromatic amine group.

(30) Priority: 13.09.82 US 417015

(43) Date of publication of application: 21.03.84 Bulletin 84/12

(45) Publication of the grant of the patent: 12.09.90 Bulletin 90/37

(84) Designated Contracting States: CH DE FR IT LI NL SE

(56) References cited:
DE-A-2 656 867
DE-A-3 315 365
DE-B-1 518 119
DE-C-1 022 793
GB-A-2 001 991
US-A-2 848 435
US-A-2 951 822

(73) Proprietor: THE DOW CHEMICAL COMPANY
2030 Dow Center Abbott Road P.O. Box 1967
Midland Michigan 48640-1967 (US)

(72) Inventor: Wang, Chun Shan
109 Rose Trail
Lake Jackson Texas (US)
Inventor: Bertram, James Lambert
115 Southern Oaks Drive
Lake Jackson Texas (US)
Inventor: Pham, Ha Quoc
410 North Yaupon
Richwood Texas (US)

(74) Representative: Sternagel, Hans-Günther, Dr. et al
Patentanwälte Dr. Michael Hann Dr. H.-G. Sternagel Sander Aue 30
D-5060 Bergisch Gladbach 2 (DE)

EP 0 103 282 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The preparation of glycidyl ethers by the reaction of an aromatic hydroxy-containing compound with epihalohydrin in the presence of a base is well known as disclosed by Lee and Neville in HANDBOOK OF EPOXY RESINS, McGraw-Hill, 1967. Because of increased material costs and since in most instances, the reaction is conducted in excess epihalohydrin, any increase in epihalohydrin yields provide for a considerable economy in manufacturing costs. Also, particularly when the epoxy resin is to be employed in electrical applications, it is desired that the epoxy resin have low hydrolyzable halide levels. The present invention provides a process for maximizing epihalohydrin yields and also produces epoxy resins low in hydrolyzable halide.

The present invention pertains to a process for preparing glycidyl derivatives of compounds having at least one aromatic hydroxyl group or aromatic amine group per molecule by reacting at least one compound having at least one aromatic hydroxyl group or aromatic amine group per molecule with an excess of at least one epihalohydrin in the presence of an alkali metal hydroxide and subsequently recovering the glycidyl derivatives; characterized by

(1) conducting the reaction in the presence of an organic solvent which codistills with water and said epihalohydrin at a boiling point below the boiling point of the lowest boiling compound among the components in the reaction mixture;

(2) conducting the reaction at a temperature and a reduced pressure sufficient to provide a distillate with a boiling point of from 45°C to 80°C, preferably from 55°C to 70°C;

(3) employing said alkali metal hydroxide as an aqueous solution and adding said aqueous alkali metal hydroxide in a continuous or intermittent manner over a period of from 0.5 to 10, preferably from 1 to 5 hours;

(4) continuously removing water by means of codistillation at a rate such that the water content of the reaction mixture is less than 6 percent, preferably from 1.5 to 4 percent by weight; and

(5) separating the water from the distillate and returning the solvent and epihalohydrin to the reaction mixture.

Description of the Preferred Embodiments

Suitable compounds having at least one aromatic hydroxyl group which can be employed herein include, for example, phenols, bisphenols, novolac resins, polyvinyl phenols, and the corresponding amine compounds, such as those represented by the following formulas:

I.

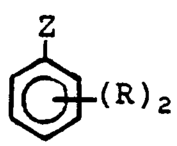

II.

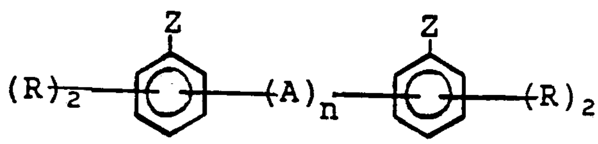

III.

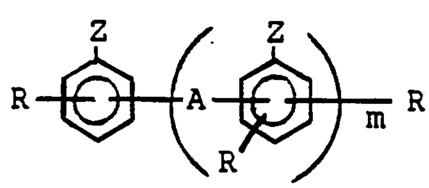

IV.

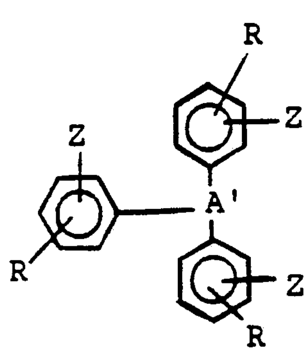

V. 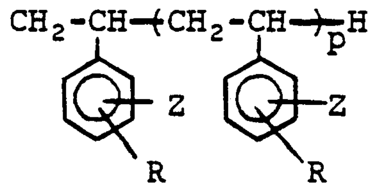

wherein each A is independently a divalent hydrocarbon group having from 1 to 12, preferably from 1 to 6 carbon atoms,

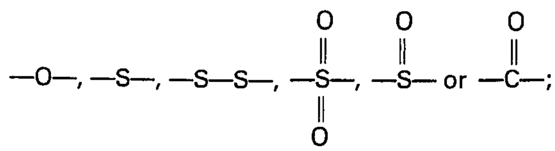

A' is a trivalent hydrocarbon group having from 1 to 12, preferably from 1 to 6, carbon atoms; each R is independently hydrogen, a hydrocarbyl group having from 1 to 10, preferably from 1 to 4, carbon atoms, a halogen atom, preferably chlorine or bromine or a hydroxyl group or an amino group; each Z is independently —OH or $NH_2$; p has a value of from 1 to 100, preferably from 2 to 50; m has a value from 1.00 to 6 and n has a value of zero or 1.

Also suitable as compounds having at least one aromatic hydroxyl or aromatic amine group per molecule are those represented by the formulas

VI. 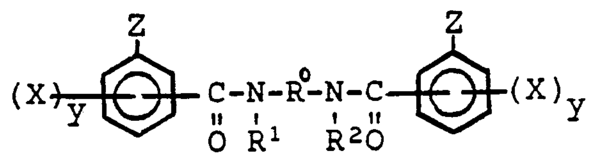

VII. 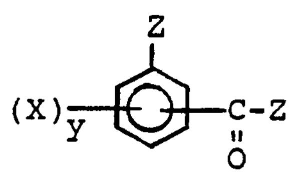

VIII. 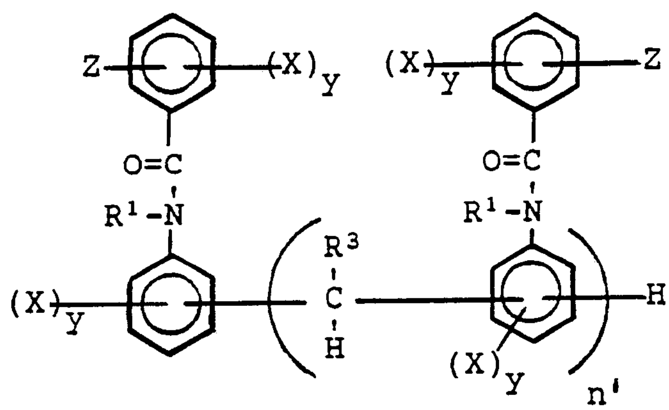

wherein each R° is a divalent hydrocarbyl group having from 1 to 18, preferably from 2 to 12 and most preferably from 2 to 6 carbon atoms, a group represented by the following formulas IX, X, XI or XII

IX. 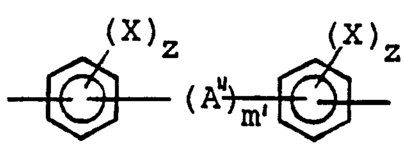

X. 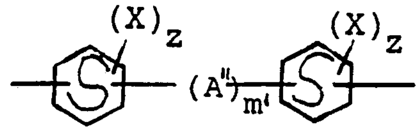

XI. 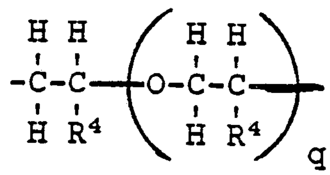

XII. 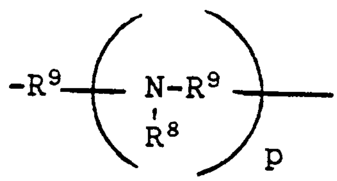

or $R^9$ can combine with $R^1$ so as to form a stable heterocyclic ring with the nitrogen atoms; each A″ is independently a divalent hydrocarbyl group having from 1 to 10, preferably from 1 to 4 carbon atoms,

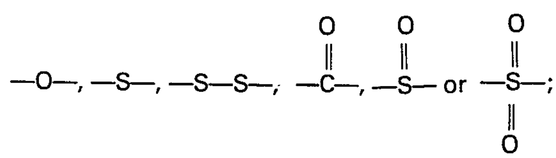

each $R^1$ is independently hydrogen, a 2,3-epoxypropyl group, a 2-alkyl-2,3-epoxy-propyl group, a monovalent hydrocarbyl group or a hydroxyl substituted monovalent hydrocarbyl group, said hydrocarbyl groups having from 1 to 9 carbon atoms, said alkyl having from 1 to 4, preferably 1 to 3 carbon atoms; each $R^2$ is independently hydrogen or an alkyl group having from 1 to 4, preferably 1 to 3 carbon atoms; each $R^3$ is independently hydrogen or an alkyl group having from 1 to 4 carbon atoms; each $R^4$ is independently hydrogen, a hydrocarbyl or halogen substituted hydrocarbyl group having from 1 to 9, preferably from 1 to 2 carbon atoms; each $R^8$ is independently selected from the same groups as $R^1$ except that $R^8$ cannot be a hydrogen; each $R^9$ is independently a divalent hydrocarbyl group having from 2 to 4, preferably 2 carbon atoms; each Z is independently —OH or —$NH_2$; each X is independently hydrogen, chlorine, bromine or a hydrocarbyl or a hydrocarbyloxy group having from 1 to 9, preferably 1 to 6 carbon atoms; each m′ independently has a value of zero or 1; n′ has an average value of from 0.01 to 6, preferably 0.1 to 4; p has an average value of from 1 to 10, preferably from 1 to 3; q has an average value of at least 1, preferably from 1 to 150, most preferably from 1 to 100 and usually from 1 to 10 and each y and z independently has a value of 1 or 2.

Also suitable are polycyclopentadiene polyphenols or aromatic polyamines represented by the formula

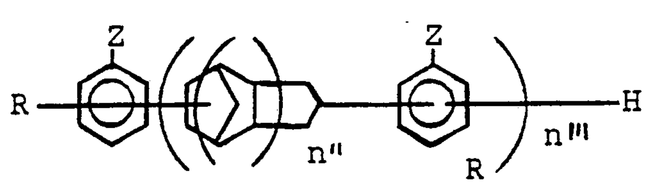

wherein Z is —OH or —$NH_2$ and n″ has a value from 1 to 5; n‴ has a value of from 1 to 10, preferably from 3 to 6; each R is independently hydrogen, a hydrocarbyl group having from 1 to 10, preferably from 1 to 4 carbon atoms, a halogen atom, preferably chlorine or bromine or a hydroxyl group or an amino group.

Suitable such polycyclopentadiene polyphenols and methods for their preparation can be found in US—A—4,390,680, issued to Donald L. Nelson, on June 28, 1983. The polycyclopentadiene aromatic polyamines can be prepared in a similar manner by substituting an aromatic amine for the phenolic compound.

Also suitable are compounds containing both at least one aromatic hydroxyl group and at least one aromatic amine group such as, for example, hydroxy aniline, and aminoxylenol.

Suitable epihalohydrins which can be employed herein include those represented by the following formula

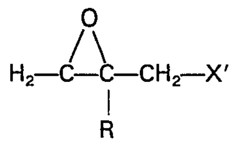

wherein R is hydrogen or a hydrocarbyl group having from 1 to 4 carbon atoms and X' is a halogen, preferably chlorine or bromine.

The epihalohydrin and the aromatic hydroxyl or aromatic amine compound are employed in a molar ratio of from 2:1 to 10:1, preferably from 2:1 to 6:1, respectively.

Suitable alkali metal hydroxides which can be employed herein include, for example, sodium hydroxide, potassium hydroxide, lithium hydroxide or mixtures thereof. The alkali metal hydroxide is employed as an aqueous solution, usually at a concentration of from 20 to 50, preferably from 40 to 50 percent by weight.

The amount of alkali metal hydroxide which is employed in the process of the present invention is from 0.80 mole to 1.2 mole of alkali metal hydroxide, preferably from 0.90 mole to 1.0 mole per each aromatic hydroxyl group and aromatic amine hydrogen.

The alkali metal hydroxide can be added either continuously or incrementally, but never is all of the alkali metal hydroxide added in one increment.

Suitable solvents which can be employed herein include any solvent which does not react with any component in the reaction mixture, is partially or wholly miscible with water, forms a codistillate with the epihalohydrin and water and the distillate has a boiling point below that of the lowest boiling component of the reaction mixture at the pressure employed. Suitable such solvents include primary and secondary alcohols such as, for example, 1-methoxy-2-propanol, 1-butoxy phenol and cyclohexanol and a mixture thereof. The secondary alcohols are preferred.

The amount of solvent which is employed will depend on the particular solvent and hydroxyl or amino compound being employed. The amount of solvent generally ranges from 5 to 50 weight percent, preferably from to 40 weight percent based on the total weight of reactants.

Suitable temperatures and pressures which are employed in the process of the present invention are those which will provide the codistillate with a boiling point of from 45°C to 80°C, preferably from 55°C to 70°C. Advantageously, the reaction is conducted at a temperature of from 45°C to 80°C, preferably from 55°C to 70°C, and at a reduced pressure of from 20.0 to 30.7 kPA (150 to 230 mm of Hg), preferably from 21.3 to 29.3 kPa (160 to 220 mm of Hg).

The reaction is conducted for a length of time such that the quantity of phenolic hydroxyl groups remaining in the reaction mixture is not greater than 0.5, preferably not greater than 0.2 percent by weight.

Upon completion of the reaction, the resultant epoxy resin is finished in any of the methods normally employed. The excess epihalohydrin is usually removed by distillation and the salt removed by filtration, centrifugation and/or water washing.

The following examples are illustrative of the present invention, but are not to be construed as to limiting thereof in any manner.

The following components were employed in the examples and comparative experiments.

PHENOLIC COMPOUND A was a phenol-formaldehyde novolac resin having an average hydroxyl equivalent weight of 104.5 and an average phenolic hydroxyl functionality of 5.7.

PHENOLIC COMPOUND B was a phenol-formaldehyde novolac resin having an average hydroxyl equivalent weight of 101 and an average phenolic hydroxy functionality of 3.6.

PHENOLIC COMPOUND C was bisphneol A.

PHENOLIC COMPOUND D was 4,4'-dihydroxybiphenyl.

PHENOLIC COMPOUND E was a cresol-formaldehyde novolac resin having an average hydroxyl equivalent weight of 118.5 and an average phenolic hydroxyl functionality of 5.7.

PHENOLIC COMPOUND F was a composition containing between 60 and 70 weight percent of tris(hydroxyphenyl)methane, the remaining 30 to 40 weight percent being higher homologs thereof.

PHENOLIC COMPOUND G was a polycyclopentadiene polyphenol resin having an average hydroxyl equivalent weight of 180 and an average phenolic hydroxyl functionality of 3.2.

PHENOLIC COMPOUND H was polycyclopentadiene polyresorcinol resin having an average hydroxyl equivalent weight of 93 and an average phenolic hydroxyl functionality of 5.5.

## Example 1

Into a one liter reaction vessel equipped with temperature and pressure control and indicating means, a means for the continuous or intermittent addition of aqueous sodium hydroxide, a means for condensing and separating water from a codistillate mixture of water, solvent and epichlorohydrin and a means for returning the solvent and epichlorohydrin to the reaction vessel was added 104.5 grams (1 equivalent) of phenolic compound A, 370 grams (4 equivalents) of epichlorohydrin and 247 grams of the methyl ether of propylene glycol (1-methoxy-2-propanol) as a solvent. After stirring at room temperature and atmospheric

pressure to thoroughly mix the contents, the temperature was raised to 65°C and the pressure was reduced to 21.3 kPa (160 mm Hg) absolute. To the resultant solution was continuously added 76 grams, 0.95 equivalent of a 50 percent aqueous sodium hydroxide solution at a constant rate over a period of 1 hour (3600 s). During the addition of the sodium hydroxide, the water was removed by codistilling with epichlorohydrin and solvent. The water content of the reaction mixture was less than 6 percent by weight. The distillate was condensed thereby forming two distinct phases, an aqueous phase (top) and an organic epichlorohydrin-solvent phase (bottom). The organic phase was continuously returned to the reactor. After completion of the sodium hydroxide addition, the reaction mixture was maintained at a temperature of 65°C and a pressure of 21.3 kPa (160 mm Hg) absolute for an additional 30 minutes (1800 s). A sample of the reaction mixture was washed to remove salt and subsequently distilled resulting in an epoxidized novolac resin having a hydrolyzable chloride content of 0.02 percent and an epoxide content of 23.5 percent which corresponds to an epoxide equivalent weight of 183. The epichlorohydrin yield was 99 percent based on an analysis of the reaction mixture for formation of by-products such as glycidol, glycerin monochlorohydrin and glycerine diglycidylether.

Comparative Experiment A (No solvent)

In a manner similar to Example 1, the following components and reaction conditions were employed.

104.5 grams (1 equiv.) of phenolic compound A
462.5 grams (5 equiv.) of epichlorohydrin
76 grams (0.95) equiv.) of 50 percent aqueous sodium hydroxide

The reaction temperature was 65°C and the reaction pressure was 21.3 kPa (160 mm Hg) absolute. The sodium hydroxide was added over a period of 1 hour (3600 s) and the reaction continued thereafter for a period of 5 hours (18,000 s). During the addition of the sodium hydroxide, the water and epichlorohydrin formed a binary azeotrope which was condensed to form two distinct phases. The organic, epichlorohydrin, (bottom) phase was continuously returned to the reaction mixture.

Even after the 5 hours of additional reaction, only 80 percent of the phenol-formaldehyde novolac had reacted and the epichlorohydrin yield was only about 80 percent.

Comparative Experiment B (105°C reaction at atmospheric pressure)

In a manner similar to Example 1, the following components and reaction conditions were employed.

104.5 grams (1 equiv.) phenolic compound A
370 grams (4 equiv.) epichlorohydrin
247 grams propylene glycol methylether (1-methoxy-2-propanol)
76 grams (0.95 equiv.) 50 percent aqueous sodium hydroxide

The reaction temperature was 105°C, the reaction pressure was atmospheric (101 kPa); and the sodium hydroxide was added continuously over a period of 1 hour (3600 s). During the addition of sodium hydroxide, the water, epichlorohydrin and propylene glycol methyl ether formed a codistillate which was condensed. The epichlorohydrin and propylene glycol methyl ether from overhead was recycled to the reaction mixture while the aqueous phase was discarded. After the completion of sodium hydroxide addition, the reaction mixture was further stirred at 105° until all of the caustic has been used up (10—15 minutes, 600—900 s). A sample was taken and analyzed for by-product formation (glycidol, glycerine monochlorohydrin, glycerine and glycerine diglycidyl ether). Besides 5 percent epichlorohydrin hydrolysis product, approximately 6 percent of epichlorohydrin polymers were observed which indicated a yield on epichlorohydrin of 89 percent. A sample of the reaction mixture was washed to remove salt and then distilled to give an epoxy novolac with a hydrolyzable chloride content of 0.2 percent (10 times higher than the one under a reduced pressure) and an epoxide content of 21.6 percent.

Comparative Experiment C (solvent present, but no codistillation)

The procedure of Comparative Experiment B was followed except that the reaction was carried out at 65°C, but no water was removed by codistillation. The water from the sodium hydroxide addition and the water of reaction remained in the reaction mixture. The yield of epichlorohydrin was 92 percent. A sample of the reaction mixture was washed to remove salt and then distilled thereby resulting in an epoxidized novolac having a hydrolyzable chloride content of 0.1 percent (5 times that produced in Example 1).

Example 2

In a manner similar to Example 1, the following components and conditions were employed.

51 grams (0.5 equiv.) of phenolic hydroxyl compound B
231.5 grams (2.5 equiv.) of epichlorohydrin
75 grams cyclohexanol
38 grams (0.475 equiv.) of 50 percent aqueous sodium hydroxide

The reaction temperature was 60°C and the reaction pressure was 20.7 pKa (155 mm Hg). The sodium hydroxide was added over a period of 1 hour (3600 s) and the reaction continued for an additional 15 minutes (900 s). The product had an epoxide content of 24.51 percent which corresponds to an equivalent weight of 175 and a hydrolyzable chloride content of 0.02 percent. The epichlorohydrin yield was 98 percent.

Example 3

In a manner similar to Example 1, the following components and conditions were employed.

114 grams (1 equiv.) of phenolic compound C
370 grams (4 equiv.) of epichlorohydrin
247 grams of propylene glycol methyl ether (1-methoxy-propanol)
80 grams (1 equiv.) of 50 percent aqueous sodium hydroxide

The reaction temperature was 65°C and the reaction pressure was about 21.3 kPa (160 mm Hg) absolute. The sodium hydroxide was added over a period of one hour 3600 s) and the reaction was continued for an additional 15 minutes (900 s).

The product had an epoxide content of 24 percent corresponding to an epoxide equivalent weight of 179 and a hydrolyzable chloride content of 0.02 percent. The epichlorohydrin yield was 99 percent.

Example 4

In a manner similar to Example 1, except where noted, the following components and conditions were employed.

93 grams (1 equiv.) of phenolic compound D
370 grams (4 equiv.) of epichlorohydrin
330 grams of propylene glycol methyl ether (1-methoxypropanol)
80 grams (1 equiv.) 50 percent aqueous sodium hydroxide

The reaction temperature was 70°C and the reaction pressure was 25.3 kPa (190 mm Hg) absolute. The sodium hydroxide was added over a period of 1 hour (3600 s). The reaction was continued for an additional 15 minutes (900 s). The product was insoluble, and precipitated from the reaction mixture; therefore, 330 grams of water was added to the reaction mixture to facilitate the precipitation thereof and the mixture was cooled to 30°C. The solid was suction filtered, washed on the filter with water and methanol and then dried in a vacuum oven thereby producing a white solid having a softening point of 155°C, an epoxide content of 26.4 percent corresponding to an epoxide equivalent weight of 163. The hydrolyzable chloride content was 0.02 percent. The epichlorohydrin yield was 98 percent.

Example 5

4,4'-Methylenedianiline (99.2 g, 0.5 mole), epichlorohydrin (370 g, 4 eq.) and 1-methoxy-2-propanol (92.5 g) were stirred under atmospheric pressure to achieve a complete solution. The solution was heated to 80° and maintained at that temperature for 3 hours (10800 s). The reaction was then cooled to 65°C and under a reduced pressure of 21.3 kPa (160 mm Hg) absolute. Aqueous sodium hydroxide (50 percent concentration, 176 g, 2.2 eq.) was added to the reaction mixture at a constant rate over a period of 1 hour (3600 s). During the addition of caustic, the water was removed by codistilling with epichlorohydrin and 1-methoxy-2-propanol. The distillate was condensed and the organic phase was continuously returned to the reaction mixture. After the addition of caustic was completed, the reaction mixture was further stirred at 65°C, 21.3 kPa (160 mm Hg) for another 15 minutes. Work-up of product as in Example 1 gave a product with 34.8 percent epoxide.

Example 6

In a manner similar to Example 1, the following components and conditions were employed.

59.3 grams (0.5 equiv.) of cresol-formaldehyde novolac (phenolic compound E)
185 grams (2.0 equiv.) of epichlorohydrin
46 grams 1-methoxy-2-propanol
38 grams (0.475 equiv.) of 50 percent aqueous sodium hydroxide

The reaction temperature was 65°C and the reaction pressure was 24.0 kPa (180 mm Hg). The sodium hydroxide was added over a period of 1 hour (3600 s) and the reaction continued for an additional 15 minutes (900 s). The water content of the reaction mixture was found to be 1.3 percent.

The product had an epoxide content of 20.5 percent corresponding to an epoxide equivalent weight of 210 and a hydrolyzable chloride content of 0.02 percent. The epichlorohydrin yield was 98 percent.

Example 7

In a manner similar to Example 1, the following components and conditions were employed.

97.3 grams (1.0 equiv.) or tris(hydroxyphenyl)-methane (phenolic compound F)
555 grams (6.0 equiv.) of epichlorohydrin
139 grams 1-methoxy-2-propanol
76 grams (0.95 equiv.) of 50 percent aqueous sodium hydroxide

The reaction temperature was 65°C and the reaction pressure was 26.0 kPa (195 mm Hg). The sodium hydroxide was added over a period of 1 hour (3600 s) and the reaction continued for an additional 30 minutes (1800 s). The water content of the reaction mixture was found to be 1.9 percent.

The product had an epoxide content of 26.5 percent corresponding to an epoxide equivalent weight of 162 and a hydrolyzable chloride content of 0.02 percent. The epichlorohydrin yield was 98 percent.

Example 8

In a manner similar to Example 1, except where noted, the following components and conditions were employed.

90 grams (0.5 equiv.) of polycyclopentadiene polyphenol (phenolic compound G)
185 grams (2.0 equiv.) of epichlorohydrin
46 grams 1-methoxy-2-propanol
38 grams (0.475 equiv.) of 50 percent aqueous sodium hydroxide

The reaction temperature was 65°C and the reaction pressure was about 24.0 kPa (180 mm Hg). The sodium hydroxide was added over a period of 1 hour (3600 s) and the reaction continued for an additional 30 minutes (1800 s). The product had a softening point of 85°C with an epoxide content of 15.8 percent and a hydrolyzable chloride content of 0.02 percent. The epichlorohydrin yield was 98 percent.

Example 9

In a manner similar to Example 1, except where noted, the following components and conditions were employed.

93 grams (1.0 equiv.) of polycyclopentadiene polyresorcinol (phenolic compounmd H)
370 grams (4.0 equiv.) epichlorohydrin
92 grams 1-methoxy-2-propanol
76 grams (0.95 equiv.) of 50 percent aqueous sodium hydroxide

The reaction temperature was 65°C and the reaction pressure was about 24.0 kPa (180 mm Hg). The sodium hydroxide was added over a period of 1 hour (3600 s) and the reaction continued for an additional 30 minutes (1800 s). The product had a softening point of 89° with an epoxide content of 24.7 percent and a hydrolyzable chloride content of 0.02 percent. The epichlorohydrin yield was 98 percent.

Examples 10 through 14 and Comparative Experiment D

(Effect of water content in the reaction mixture on the yield and insoluble polymer formation)

A series of experiments were conducted in a manner similar to Example 1 except that the amount of water in the reaction vessel was varied. The following components and reaction conditions were employed.

104.5 grams (1 equiv.) of phenolic compound A
370 grams (4 equiv.) of epichlorohydrin
92.5 grams of the methyl ether of propylene glycol (1-methoxy-2-propnaol) as a solvent

After stirring at room temperature and atmospheric pressure (101 kPa) to thoroughly mix the components, the temperature was raised to 65°C and the pressure was reduced to a predetermined value. To the resultant solution was continuously added 76 grams, 0.95 equivlent, of a 50 percent aqueous sodium hydroxide solution at a constant rate over a period of two hours (7200 s). During the addition of the sodium hydroxide, the water was removed by codistilling with epichlorohydrin and solvent. The distillate was condensed thereby forming two distinct phases. The organic phase (bottom) was continuously retured to the reactor. After completion of the sodium hydroxide addition, the reaction mixture was maintained at a temperature of 65°C for an additional 30 minutes (1800 s). A sample was taken for analysis of by-products to determine the epichlorohydrin yield and the rest of reaction mixture was washed to remove salt and subsequently distilled resulting in an epoxidized novolac resin. Results of experiments were as follows:

| Examples and Comparative Experiment | Reaction Pressure, (mm Hg) kPa | $H_2O$ Content in Reactor (%) | Hydrolyzable Chloride (%) | Insoluble Polymer (%) | Epi-chloro-hydrin Yield (%) |
|---|---|---|---|---|---|
| 10 | (180) 24.0 | 1.2 | 0.02 | 1.6 | 98 |
| 11 | (185) 24.7 | 1.56 | 0.02 | 0.6 | 99 |
| 12 | (195) 26.0 | 2.0 | 0.02 | 0.76 | 99 |
| 13 | (215) 28.7 | 3.5 | 0.05 | <0.1 | 98.5 |
| 14 | (220) 29.3 | 4.0 | 0.05 | <0.1 | 98 |
| D | (240) 32.0 | 6.0 | 0.80 | <0.1 | 94 |

At too low a water content, epichlorohydrin yield is high but insoluble polymer formation requires filtration in order to remove the polymer. At water contents of between 1.5 and 4.0 percent, the epichlorohydrin yields are 98 percent or above and insoluble polymer formation is less than 1 percent. A water content of 65 percent and above in the reaction mixture resulted in reduced epichlorohydrin yield and also increased the hydrolyzable chloride content of the resultant product.

**Claims for the Contracting States: CH FR IT LI NL SE**

1. A process for preparing glycidyl derivatives of compounds having at least one aromatic hydroxyl group or aromatic amine group per molecule by reacting at least one compound having at least one aromatic hydroxyl group or aromatic amine group per molecule with an excess of at least one epichlorohydrin in the presence of an alkali metal hydroxide and subsequently recovering the glycidyl derivative product; characterized by

(1) conducting the reaction in the presence of an organic solvent which codistills with water and said epichlorohydrin at a boiling point below the boiling point of the lowest boiling compound among the components in the reaction mixture;

(2) conducting the reaction at a temperature and a reduced pressure sufficient to provide a distillate with a boiling point of from 45°C to 80°C;

(3) employing said alkali metal hydroxide as an aqueous solution and adding said aqueous alkali metal hydroxide in a continuous or intermittent manner over a period of from 0.5 to 10 hours;

(4) continuously removing water by means of codistillation at a rate such that the water content of the reaction mixture is less than 6 percent by weight; and

(5) separating the water from the codistilation and returning the solvent and epichlorohydrin to the reaction mixture.

2. The process of Claim 1 characterized in that the temperature is from 55°C to 70°C, the aqueous alkali metal hydroxide is added over a period of from 1 to 5 hours and water is removed at a rate such that the water content in the reaction mixture is from 1.5 percent to 4 percent by weight.

3. A process of Claim 1 characterized in that said organic solvent is a secondary alcohol.

4. A process of Claim 3 characterized in that the secondary alcohol is cyclohexanol, 1-methoxy-2-propanol or a mixture thereof.

**Claims for the Contracting State: DE**

1. A process for preparing glycidyl derivatives of compounds having at least one aromatic hydroxyl group or aromatic amine group per molecule by reacting at least one compound having at least one aromatic hydroxyl group or aromatic amine group per molecule with an excess of at least one epichlorohydrin in the presence of an alkali metal hydroxide and subsequently recovering the glycidyl derivative product; characterized by

(1) conducting the reaction in the presence of an organic solvent selected from primary and secondary alcohols, which codistills with water and said epichlorohydrin at a boiling point below the boiling point of the lowest boiling compound among the components in the reaction mixture;

(2) conducting the reaction at a temperature and a reduced pressure sufficient to provide a distillate with a boiling point of from 45°C to 80°C;

(3) employing said alkali metal hydroxide as an aqueous solution and adding said aqueous alkali metal hydroxide in a continuous or intermittent manner over a period of from 0.5 to 10 hours;

(4) continuously removing water by means of codistillation at a rate such that the water content of the reaction mixture is less than 6 percent by weight; and

(5) separating the water from the codistillate and returning the solvent and epichlorohydrin to the reaction mixture.

2. The process of Claim 1 characterized in that the temperature is from 55°C to 70°C, the aqueous alkali metal hydroxide is added over a period of from 1 to 5 hours and water is removed at a rate such that the water content in the reaction mixture is from 1.5 percent to 4 percent by weight.

3. A process of Claim 1 characterized in that said organic solvent is a secondary alcohol.

4. A process of Claim 3 characterized in that the secondary alcohol is cyclohexanol, 1-methoxy-2-propanol or a mixture thereof.

**Patentansprüche für die Vertragsstaaten: CH FR IT LI NL SE**

1. Verfahren zum Herstellen von Glycidylderivaten von Verbindungen, die mindestens eine aromatische Hydroxylgruppe oder aromatische Aminogruppe pro Molekül aufweisen, durch Umsetzen mindestens einer Verbindung, die mindestens eine aromatische Hydroxylgruppe oder aromatische Aminogruppe pro Molekül aufweist mit einem Überschuß mindestens eines Epihalohydrins in Gegenwart von einem Alkalihydroxid, und anschließendes Gewinnen des Glycidylderivatproduktes, gekennzeichnet durch

(1) Ausführen der Reaktion in Gegenwart dines organischen Lösungsmittels, das mit Wasser

zusammen destilliert und wobei das Epihalohydrin einen Siedepunkt unter dem Siedepunkt der niedrigst siedenden Verbindung unter den Bestandteilen in der Reaktionsmischung aufweist,

(2) Ausführen der Reaktion bei einer Temperatur und einem verminderten Druck ausreichen, um ein Destillat mit einem Siedepunkt von 45°C bis 80°C zu erzeugen,

(3) Verwenden des Alkalihydroxids als wäßrige Lösung und kontinuierliches oder intermittierendes Zugeben des wäßrigen Alkalihydroxids während eines Zeitraumes von 0,5 bis 10 Stunden,

(4) kontinuierliches Entfernen des Wassers durch Kodestillation mit einer solchen Geschwindigkeit, daß der Wassergehalt in der Reaktionsmischung kleiner als 6 Gew.-% beträgt, und

(5) Abtrennen des Wassers aus dem Kodestillat und Zurückführen des Lösungsmittels und Epihalohydrins in die Reaktionsmischung.

2. Verfahren nach Anspruch 1, dadurch gekennzeichnet, daß die Temperatur 55°C bis 70°C beträgt, das wäßrige Alkalihydroxid während eines Zeitraumes von 1 bis 5 Stunden zugesetzt wird und Wasser mit einer solchen Geschwindigkeit entfernt wird, daß der Wassergehalt in der Reaktionsmischung von 1,5 bis 4 Gew.-% beträgt.

3. Verfahren nach Anspruch 1, dadurch gekennzeichnet, daß das organische Lösungsmittel ein sekundärer Alkohol ist.

4. Verfahren nach Anspruch 3, dadurch gekennzeichnet, daß der sekundäre Alkohol Cyclohexanol, 1-Methoxy-2-propanol oder eine Mischung derselben ist.

**Patentansprüche für den Vertragsstaat: DE**

1. Verfahren zum Herstellen von Glycidylderivaten von Verbindungen, die mindestens eine aromatische Hydroxylgruppe oder aromatische Aminogruppe pro Molekül aufweisen, durch Umsetzen mindestens einer Verbindung, die mindestens eine aromatische Hydroxylgruppe oder aromatische Aminogruppe pro Molekül aufweist mit einem Überschuß mindestens eines Epihalohydrins in Gegenwart von einem Alkalihydroxid, und anschließendes Gewinnen des Glycidylderivatproduktes, gekennzeichnet durch

(1) Ausführen der Reaktion in Gegenwart dines organischen Lösungsmittels, ausgewählt aus primären und sekundären Alkoholen, das mit Wasser zusammen destilliert und wobei das Epihalohydrin einen Siedepunkt unter dem Siedepunkt de niedrigst siedenden Verbindung unter den Bestandteilen in der Reaktionsmischung aufweist,

(2) Ausführen der Reaktion bei einer Temperatur und einem verminderten Druck ausreichend, um ein Destillat mit einem Siedepunkt von 45°C bis 80°C zu erzeugen,

(3) Verwenden des Alkalihydroxids als wäßrige Lösung und kontinuierliches oder intermittierendes Zugeben des wäßrigen Alkalihydroxids während eines Zeitraumes von 0,5 bis 10 Stunden,

(4) kontinuierliches Entfernen des Wassers durch Kodestillation mit einer solchen Geschwindigkeit, daß der Wassergehalt in der Reaktionsmischung kleiner als 6 Gew.-% beträgt, und

(5) Abtrennen des Wassers aus dem Kodestillat und Zurückführen des Lösungsmittels und Epihalohydrins in die Reaktionsmischung.

2. Verfahren nach Anspruch 1, dadurch gekennzeichnet, daß die Temperatur 55°C bis 70°C beträgt, das wäßrige Alkalihydroxid während eines Zeitraumes von 1 bis 5 Stunden zugesetzt wird und Wasser mit einer solchen Geschwindigkeit entfernt wird, daß der Wassergehalt in der Reaktionsmischung von 1,5 bis 4 Gew.-% beträgt.

3. Verfahren nach Anspruch 1, dadurch gekennzeichnet, daß das organische Lösungsmittel ein sekundärer Alkohol ist.

4. Verfahren nach Anspruch 3, dadurch gekennzeichnet, daß der sekundäre Alkohol Cyclohexanol, 1-Methoxy-2-propanol oder eine Mischung derselben ist.

**Revendications pour les Etats contractants: CH FR IT LI NL SE**

1. Procédé de préparation de dérivés glycidyliques de composés ayant au moins un groupe hydroxy aromatique ou un groupe amine aromatique par molécule en faisant réagir au moins un composé ayant au moins un groupe hydroxy aromatique ou un groupe amine aromatique par molécule avec un excès d'au moins une épihalohydrine en présence d'un hydroxyde d'un métal alcalin et en récupérant ensuite le dérivé glycidylique produit; caractérisé par la fait que l'on:

(1) conduit la réaction en présence d'un solvant organique qui codistille avec l'eau et avec ladite épihalohydrine à un point d'ébullition situé en-dessous du point d'ébullition du composé ayant le point d'ébullition le plus bas parmi les composants du mélange réactionnel;

(2) conduit la réacton à une température et à une pression réduite suffisantes pour donner un distillat ayant un point d'ébullition compris entre 45°C et 80°C;

(3) emploie ledit hydroxyde alcalin sous forme d'une solution aqueuse et ajoute ledit hydroxyde alcalin sous forme aqueuse de façon continue ou intermittente sur une période de 0,5 à 10 heures;

(4) enlève de façon continue l'eau au moyen d'une codistillation à un débit tel que la teneur en eau du mélange réactionnel soit inférieure à 6 pour-cent en poids; et

(5) sépare l'eau et le codistillat et recycle le solvant et l'épihalohydrine dans le mélange réactionnel.

2. Procédé selon la revendication 1, caractérisé par le fait que la température est comprise entre 55°C et 70°C, que l'on ajoute l'hydroxyde aqueux du métal alcalin sur une période de 1 à 5 heures et que l'on enlève l'eau à un débit tel que la teneur en eau dans le mélange en réaction soit de 1,5 pour-cent à 4 pour-cent en poids.

3. Procédé selon la revendication 1, caractérisé par le fait que ledit solvant organique est un alcool secondaire.

4. Procédé selon la revendication 3, caractérisé par le fait que l'alcool secondaire est le cyclohexanol, le 1-méthoxy-2-propanol ou un mélange d'entre eux.

**Revendications pour l'Etat contractant: DE**

1. Procédé de préparation de dérivés glycidyliques de composés ayant au moins un groupe hydroxy aromatique ou un groupe amine aromatique par molécule en faisant réagir au moins un composé ayant au moins un groupe hydroxy aromatique ou un groupe amine aromatique par molécule avec un excès d'au moins une épihalohydrine en présence d'un hydroxyde d'un métal alcalin et en récupérant ensuite le dérivé glycidylique produit; caractérisé par la fait que l'on:

(1) conduit la réaction en présence d'un solvant organique, choisi d'alcools primaries et secondaires, qui codistille avec l'eau et avec ladite épihalohydrine à un point d'ébullition situé en-dessous du point d'ébullition du composé ayant le point d'ébullition le plus bas parmi les composants du mélange réactoinnel;

(2) conduit la réaction à une température et à une pression réduite suffisantes pour donner un distillat ayant un point d'ébullition compris entre 45°C et 80°C;

(3) emploie ledit hydroxyde alcalin sous forme d'une solution aqueuse et ajoute ledit hydroxyde alcalin sous forme aqueuse de façon continue ou intermittente sur une période de 0,5 à 10 heures;

(4) enlève dé façon continue l'eau au moyen d'une codistillation à un débit tel que la teneur en eau du mélange réactionnel soit inférieure à 6 pour-cent en poids; et

(5) sépare l'eau et le codistillat et recycle le solvant et l'épihalohydrine dans le mélange réactionnel.

2. Procédé selon la revendication 1, caractérisé par le fait que la température est comprise entre 55°C et 70°C, que l'on ajoute l'hydroxyde aqueux du métal alcalin sur une période de 1 à 5 heures et que l'on enlève l'eau à un débit tel que la teneur en eau dans le mélange en réaction soit de 1,5 pour-cent à 4 pour-cent en poids.

3. Procédé selon la revendication 1, caractérisé par le fait que ledit solvant organique est un alcool secondaire.

4. Procédé selon la revendication 3, caractérisé par le fait que l'alcool secondaire est le cyclohexanol, le 1-méthoxy-2-propanol ou un mélange d'entre eux.